# EUROPÄISCHE PATENTSCHRIFT

(11) **EP 3 387 307 B1**
(45) Veröffentlichungstag und Bekanntmachung des Hinweises auf die Patenterteilung: **06.11.2019**
(21) Anmeldenummer: 16809334.2
(22) Anmeldetag: 05.12.2016
(51) Int. Cl.: F16K 31/53, F16K 31/04, F02M 26/67

(54) **VENTIL**
VALVE
CLAPET

(30) Priorität: 07.12.2015 DE 102015224467
(43) Veröffentlichungstag der Anmeldung: 17.10.2018
(73) Patentinhaber: CPT Group GmbH, 30165 Hannover (DE)
(72) Erfinder: MIKOLAJEK, Carsten, 64347 Griesheim (DE); WEIS, Christian, 55257 Budenheim (DE)
(86) Internationale Anmeldenummer: PCT/EP2016/079773
(87) Internationale Veröffentlichungsnummer: WO 2017/097713

(56) Entgegenhaltungen:
- US-A1- 2010 176 325
- US-A1- 2010 319 663
- US-A1- 2013 139 503

## Beschreibung

### Technisches Gebiet

Die Erfindung betrifft ein Ventil zum Freigeben oder Verschließen einer Strömungsstrecke, mit einem Ventilteller, einem Ventilstößel und mit einer Übersetzungsvorrichtung zur Übersetzung einer Drehbewegung in eine translatorische Bewegung.

### Stand der Technik

In einer Vielzahl von Anwendungsbereichen werden zum Zwecke der Betätigung eines Ventils Rotationsbewegungen eines Antriebsmotors in eine lineare beziehungsweise in eine translatorische Bewegung übersetzt. Dieses Prinzip wird beispielsweise auch bei Ventilen zur Steuerung der Abgasrückführung in Kraftfahrzeugen angewendet. Hierzu wird oftmals eine Getriebeübersetzung genutzt, die mit einer entsprechenden Kinematik die Drehbewegung in eine lineare beziehungsweise translatorische Bewegung übersetzt. Die Übersetzung der Drehbewegung kann beispielsweise über einen Kurbelantrieb oder ein Kulissengetriebe realisiert werden. Hierzu sind im Stand der Technik vielfältige konstruktive Ausgestaltungen bekannt, siehe zum Beispiel die US 2010/176325 A1.

Nachteilig an Vorrichtungen dieser Art ist insbesondere, dass bei der Übersetzung der Bewegung unerwünschte Querkräfte entstehen, die auf den Ventilstößel oder den Ventilteller übertragen werden können. Dies führt zu einer höheren Abnutzung und zu einer reduzierten Lebensdauer. Außerdem kann es zu einem Verkanten des Ventils kommen.

Weiterhin nachteilig ist, dass insbesondere Kulissen in Kulissengetrieben mit einer sehr hohen Fertigungsgenauigkeit erzeugt werden müssen, um das Spiel am Ventilteller und Ventilstößel möglichst gering zu halten. Auch ist es nachteilig, dass aufgrund von Bauraumvorgaben und der konstruktiven Ausgestaltung von Kurbelantrieben oder Kulissenantrieben oft nur eine einseitige Lagerung des Ventilstößels vorgesehen ist, wodurch es insbesondere zum Verkippen beziehungsweise Verkanten des Ventilstößels kommen kann.

### Darstellung der Erfindung, Aufgabe, Lösung, Vorteile

Daher ist es die Aufgabe der vorliegenden Erfindung, ein Ventil zu schaffen, welches eine hinsichtlich der Kippanfälligkeit des Ventilstößels optimierte Bauform hat und weiterhin eine verbesserte Übersetzung der Drehbewegung eines Antriebsmotors in eine translatorische Bewegung des Ventilstößels aufweist.

Die Aufgabe hinsichtlich des Ventils wird durch ein Ventil mit den Merkmalen von Anspruch 1 gelöst.

Ein Ausführungsbeispiel der Erfindung betrifft ein Ventil zum Freigeben oder Verschließen einer Strömungsstrecke, mit einem Ventilteller, einem Ventilstößel und mit einer Übersetzungsvorrichtung zur Übersetzung einer Drehbewegung in eine translatorische Bewegung, wobei die Übersetzungsvorrichtung durch einen um eine Drehachse drehbar gelagerten Kipphebel gebildet ist, welcher über ein Zahnsegment von einer Antriebsscheibe um die Drehachse verdrehbar ist, wobei der Kipphebel mittels Schubstangen mit dem Ventilstößel verbunden ist, wobei die Schubstangen gegenüber dem Kipphebel und dem Ventilstößel drehbar gelagert sind. Die Schubstangen sind ferner radial versetzt und parallel zur Mittelachse des Ventilstößels angeordnet.

Vorteilhafterweise wird ein Antriebsmotor, beispielsweise eine Elektromotor, genutzt, um das Ventil zu bewegen. Die Drehbewegung des Antriebsmotors wird auf eine oder mehrere Antriebsscheiben übertragen, wodurch beispielsweise auch eine Übersetzung der Antriebskraft erreicht wird. Zur Wandlung der Drehbewegung in eine translatorische Bewegung ist eine Übersetzungsvorrichtung vorgesehen. Diese ist besonders vorteilhaft durch einen Kipphebel gebildet, der um eine Drehachse drehbar gelagert ist. Die Lagerung kann vorteilhaft in Strukturen geschehen, die um das Ventil herum angeordnet sind.

Die Drehung des Kipphebels um seine eigene Drehachse wird mittels Schubstangen auf den Ventilstößel übertragen, der seinerseits mit dem Ventilteller verbunden ist. Der Ventilteller kann auch einteilig mit dem Ventilstößel ausgebildet sein und bewegt sich entsprechend mit dem Ventilstößel mit.

Die Schubstangen dienen der Kraftübertragung von dem Kipphebel auf den Ventilstößel. Durch die prinzipiell ortsfeste Lagerung des Kipphebels und einer Verschiebbarkeit des Ventilstößels relativ zur Lagerung des Kipphebels kann eine für das Freigeben und Verschließen einer Strömungsstrecke ausreichende Bewegungsstrecke für den Ventilstößel beziehungsweise den Ventilteller erreicht werden.

Der Kipphebel bildet mit den Schubstangen ein Kniehebel-Gelenk, wobei durch den Abstand der Drehachse zu den Lagerungen der Schubstangen am Kipphebel der maximale Verschiebeweg des Ventilstößels definiert wird.

Durch eine parallele Führung der Schubstangen kann das Entstehen von Querkräften oder um den Ventilstößel wirkenden Momenten minimiert oder gänzlich verhindert werden. Eine Anordnung von zwei Schubstangen, die jeweils radial beabstandet zum Ventilstößel angeordnet sind, kann insbesondere ein Verkippen oder Verkanten des Ventilstößels vermieden werden, da eine beidseitige Krafteinleitung dem entgegen wirkt.

Besonders vorteilhaft ist es, wenn der Ventilstößel mittels einer Vorspannvorrichtung gegen die durch den Kipphebel erzeugbare translatorische Bewegung vorgespannt ist. Die Vorspannvorrichtung kann beispielsweise durch eine Feder gebildet sein. Im einfachsten Fall ist eine Spiralfeder vorgesehen, wobei der Ventilstößel entlang der Mittelachse der Spiralfeder durch die Spiralfeder geführt ist, wodurch insbesondere eine gleichmäßige Krafteinleitung in den Ventilstößel erreicht werden kann. Außerdem sind die von der Spiralfeder verursachten Querkräfte hierbei minimal.

Auch ist es zu bevorzugen, wenn der Ventilstößel zwei Radiallager aufweist, wobei ein Radiallager am zum Ventilteller benachbarten Endbereich des Ventilstößels angeordnet ist und das andere Radiallager an dem vom Ventilteller abgewandten Endbereich des Ventilstößels angeordnet ist. Eine Lagerung des Ventilstößels an zwei entlang der Haupterstreckungsrichtung des Ventilstößels voneinander weit entfernten Radiallagern ist vorteilhaft, um eine möglichst genau Führung des Ventilstößels zu erreichen. Bei der Verwendung von zwei unabhängigen Radiallagern können diese entsprechend mit einer kürzeren axialen Erstreckung ausgebildet sein.

In einer alternativen Ausführung ist auch die Lagerung mit nur einem Radiallager vorsehbar. In diesem Fall, ist es jedoch besonders bevorzugt, wenn die axiale Erstreckung des Ra diallagers deutlich größer ist als bei der Verwendung von zwei unabhängigen Radiallagern. Der von dem Radiallager geführte Bereich des Ventilstößels muss zur Erreichung einer ausreichend genauen Führung wesentlich verlängert sein.

Darüber hinaus ist es vorteilhaft, wenn das Zahnsegment eine Innenverzahnung aufweist und die Antriebsscheibe in die Innenverzahnung eingreift, wobei durch eine Verdrehung der drehbar gelagerten Antriebsscheibe der Kipphebel um seine Drehachse verdrehbar ist.

Das Zahnsegment ist Teil des Kipphebels und dient insbesondere der Übertragung der Drehbewegung einer Antriebsscheibe auf den Kipphebel beziehungsweise die Schubstangen. Das Zahnsegment ist bevorzugt durch ein Teilsegment einer kreisrunden Scheibe gebildet die in einer Aussparung eine Innenverzahnung aufweist. Eine Scheibe ist in diesem Fall insbesondere durch eine wesentlich größere Erstreckung in radialer Richtung als in axialer Richtung gekennzeichnet. Auch ein anderes Teilsegment als das einer kreisrunden Scheibe kann erfindungsgemäß verwendet werden. Eine Antriebsscheibe weist vorzugsweise eine Außenverzahnung auf, die in die Innenverzahnung eingreift. Dies kann beispielsweise über eine Verzahnung am Außenumfang der Antriebsscheibe realisiert werden. Auch ist es vorsehbar, dass die Antriebsscheibe einen axial abragenden Vorsprung aufweist, der entsprechende Zahnelemente aufweist. Dieser axial abragende Vorsprung erstreckt sich in Umfangsrichtung der Antriebsscheibe vorzugsweise nur über eine eingegrenzten vorgebbaren Winkelbereich, wobei die Länge des Winkelbereichs in Umfangsrichtung in Abhängigkeit von dem maximal notwendigen Verstellweg des Ventils bestimmt ist.

Da regelmäßig die Bewegung in translatorischer Richtung auf einen eng definierten Arbeitsweg, gewöhnlich einige Millimeter bis wenige Zentimeter, begrenzt ist, ist eine Verzahnung zwischen der Antriebsscheibe und dem Zahnsegment über einen Winkelbereich in Umfangsrichtung von weniger als 90 Grad regelmäßig ausreichend. Dies ist besonders vorteilhaft, da die einzelnen Elemente dadurch platzsparender ausgebildet werden können, wodurch das Ventil insgesamt eine kompaktere Bauform aufweisen kann.

Auch kann alternativ ein Zahnrad mit einer Außenverzahnung vorgesehen werden, welches auch um die Drehachse der Antriebsscheibe verdreht werden kann und mit der Antriebsscheibe fest verbunden ist. Durch eine unterschiedliche Größengestaltung des Zahnrades und der Antriebsscheibe kann auch eine zusätzliche Getriebeübersetzung zur Veränderung der Drehzahl oder der übertragenen Drehmomente realisiert werden.

Weiterhin ist es vorteilhaft, wenn der Ventilstößel eine sich in radialer Richtung vom Ventilstößel aus erstreckende scheibenförmige Aufnahmevorrichtung zur Aufnahme der Vorspannvorrichtung aufweist, wobei die Aufnahmevorrichtung Freistiche zur Durchführung der Schubstangen aufweist. Durch eine solche tellerartige Ausformung kann die Vorspannvorrichtung, die bevorzugt eine Spiralfeder ist, auf einfache Weise aufgenommen werden, wobei insbesondere die Krafteinleitung besonders gleichmäßig und vergleichsweise frei von Querkräften erfolgen kann. Um für die Schubstangen ausreichend Freigang zu gewährleisten, weist die scheibenförmige Aufnahmevorrichtung bevorzugt Freistiche auf. Dies erhöht wesentlich den maximalen Winkel, den eine Schubstange gegenüber der Mittelachse des Ventilstößels einnehmen kann und somit auch den maximalen Verschiebeweg des Ventilstößels.

Auch ist es zweckmäßig, wenn die Schubstangen beidseitig an ihren Endbereichen jeweils eine Durchgangsbohrung aufweisen, wobei die Durchgangsbohrungen parallel zur Drehachse des Kipphebels verlaufen und durch die Durchgangsbohrungen Achsenelemente geführt sind, die ebenfalls parallel zur Drehachse des Kipphebels ausgerichtet sind, wobei die Schubstangen um die jeweiligen Achsenelemente drehbar sind und die Achsenelemente drehfest mit dem Ventilstößel oder dem Kipphebel verbunden sind.

Dies ist vorteilhaft, um die Schubstangen sowohl gegenüber dem Kipphebel als auch gegenüber dem Ventilstößel drehbar zu lagern. Auf diese Weise kann eine ausreichende Beweglichkeit erzeugt werden, um die Bewegung des Kipphebels vorteilhaft auf den Ventilstößel übertragen zu können. Erst durch eine drehbare Lagerung der Schubstangen kann die Funktion eines Kniehebel-Gelenks realisiert werden.

Darüber hinaus ist es vorteilhaft, wenn der Kipphebel zwei Anbindungsbereiche zur Anbindung jeweils einer Schubstange aufweist, wobei der Kipphebel eine Aussparung aufweist, durch welche der Ventilstößel verläuft, wobei die Anbindungsbereiche in radialer Richtung rechts und links von dem Ventilstößel angeordnet sind. Dadurch kann ein Aufbau erreicht werden, bei dem der Ventilstößel zentral durch den Kipphebel geführt ist und die Schubstangen jeweils rechts und links angeordnet sind. Dadurch kann eine besonders gleichmäßige Kraftübertragung vom Kipphebel auf den Ventilstößel erreicht werden.

Weiterhin ist es zweckmäßig, wenn der Kipphebel und/oder das Zahnsegment und/oder die Antriebsscheibe und/oder die Schubstangen und/oder der Ventilstößel aus einem Kunststoff gefertigt sind. Aufgrund der optimierten Gestaltung des Ventils kann eine besonders optimierte Kraftübertragung erreicht werden, die sich insbesondere durch geringe Querkräfte und Störmomente auszeichnet. Dadurch können die einzelnen Elemente geringere Dimensionen aufweisen oder aus weniger robusten Werkstoffen gefertigt werden, ohne dabei die Funktion des Ventils und die Dauerhaltbarkeit zu gefährden. Es kann insbesondere durch die Verwendung von Kunststoff ein wesentlich leichteres Ventil erzeugt werden, dass zusätzlich eine verbesserte thermische Isolation bietet und hinsichtlich der Entstehung von Störgeräuschen ebenfalls vorteilhaft ist.

Auch ist es vorteilhaft, wenn das Ventil durch die Vorspannvorrichtung stromlos schließbar ist. Dies ist vorteilhaft, da so bei einem Defekt des Steuergerätes oder einem anderen Ausfallgrund des Antriebsmotors das Ventil durch die Vorspannvorrichtung in jedem Fall geschlossen wird. Ein versehentliches Öffnen oder Offenstehen des Ventils wird so auf einfache Weise wirkungsvoll vermieden. Auch kann eine Beschädigung durch ein ungewollt in die Strömungsstrecke hineinragendes Ventilelement, insbesondere den Ventilteller, vermieden werden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine perspektivische Ansicht eine erfindungsgemäßen Ventils mit einem Elektromotor, einer Antriebsscheibe, dem Kipphebel, den Schubstangen, der Vorspannvorrichtung, dem Ventilstößel und dem Ventilteller,
- Fig. 2: eine Aufsicht auf das Ventil nach Figur 1 und
- Fig. 3: eine Seitenansicht des bereits in den Figuren 1 und 2 gezeigten Ventils.

### Bevorzugte Ausführung der Erfindung

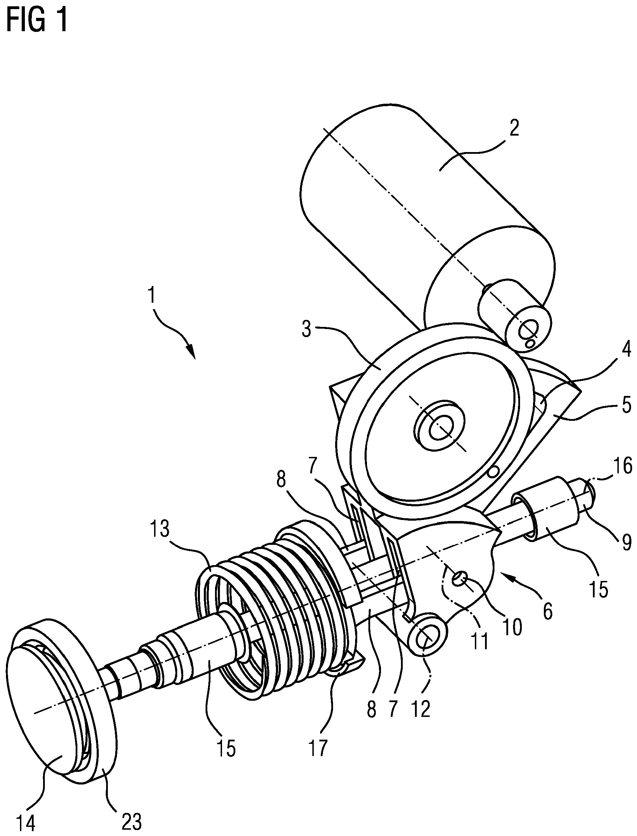

Die Figur 1 zeigt ein Ventil 1 mit einem Elektromotor 2, dessen Abtriebswelle das Antriebsrad 3 antreibt. Auf der nach hinten gerichteten Seite des Antriebsrades 3 ist ein Zahnrad mit einer Außenverzahnung angeordnet. Das nicht gezeigte Zahnrad greift in die Aussparung 4 des Zahnsegmentes 5 ein, welches Teil des gesamten Kipphebels 6 ist.

Die Aussparung 4 weist eine Innenverzahnung auf, in welche die Außenverzahnung des nicht gezeigten Zahnrades eingreift. Durch diese Interaktion der Außenverzahnung und der Innenverzahnung kann die Drehbewegung von dem Antriebsrad 3 auf das Zahnsegment 5 beziehungsweise den Kipphebel 6 übertragen werden kann. Das Zahnsegment 5 ist als Teilabschnitt eines kreisrunden scheibenförmigen Elements ausgebildet und mündet im unteren Bereich in die Anbindungsbereiche 7 des Kipphebels 6. Die Anbindungsbereiche 7 dienen jeweils zur Anbindung einer Schubstange 8, die den Kipphebel 6 mit dem Ventilstößel 9 verbinden. Die Schubstangen 8 sind in den Anbindungsbereichen 7, die im Wesentlichen durch eine U-förmigen Schenkel gebildet sind, entlang einer durch die Öffnung 10 verlaufenden Achse 11 drehbar gelagert. Die U-förmigen Schenkel der Anbindungsbereiche 7 sind parallel zueinander links und rechts der Mittelachse 16 des Ventilstößels 9 angeordnet. Die Achse 11 ist parallel zur Drehachse 12 des Kipphebels 6 angeordnet. Darüber hinaus sind auch die Drehachsen des Antriebsmotors 2 und der Antriebsscheibe 3 parallel zur Drehachse 12 des Kipphebels 6 angeordnet.

Der Ventilstößel 9 ist im Wesentlichen durch ein Rotationssymmetrisches Element gebildet und verläuft zentral durch den Kipphebel 6 und die als Vorspannvorrichtung wirkende Spiralfeder 13. Am linken Endbereich des Ventilstößels 9 ist ein Ventilteller 14 angeordnet, der zum Verschließen und Freigeben einer in Figur 1 nicht gezeigten Strömungsstrecke dient. Hierzu kann der Ventilteller 14 in einen Ventilsitz 23 geschoben werden oder aus diesem herausgezogen werden. Der Ventilsitz 23 ist in den Figuren 1 bis 3 jeweils durch einen Ring angedeutet, der beispielsweise Teil eines Gehäuses sein kann. Der Ventilstößel 9 ist durch zwei Radiallager 15 gelagert, die an den beiden Endbereichen des Ventilstößels 9 angeordnet sind und eine geführte Bewegung entlang der Mittelachse 16 des Ventilstößels 9 erlauben.

Die Spiralfeder 13 ist gegenüber einer nicht gezeigten Struktur abgestützt und gegenüber dem Ventilstößel über die scheibenförmige Aufnahmevorrichtung 17. Die Spiralfeder wirkt der Bewegung des Ventilstößels nach links entgegen und hält das Ventil somit in einem stromlosen Zustand des Antriebsmotors 2 geschlossen.

Der Kipphebel 6 bildet mit den Schubstangen 8 ein KniehebelGelenk. Die Schubstangen 8 sind gegenüber radial abragenden Achsenabschnitten des Ventilstößels 9, die nicht gezeigt sind, drehbar gelagert. Die Achsenabschnitte verlaufen ebenfalls parallel zur Drehachse 12 des Kipphebels 6. Weiterhin sind die Schubstangen 8 gegenüber dem Kipphebel 6 drehbar in den Anbindungsbereichen 7 gelagert. Die durch die Öffnung 10 verlaufende Achse, an welcher die Schubstangen 8 im Anbindungsbereich 7 drehbar gelagert sind, verläuft ebenfalls parallel zur Drehachse 8. Durch die parallele Führung der jeweiligen Achsen kann der Kipphebel 6 mit einer nur sehr geringen Entstehung von Querkräften am Ventilstößel 9 bewegt werden.

Besonders vorteilhaft am Ventil 1 nach Figur 1 ist, dass durch die Innenverzahnung zwischen dem Zahnsegment 5 des Kipphebels 6 und der Antriebsscheibe 3 eine Kraftübertragung realisiert ist, die besonders querkraftfrei funktioniert, da die Innenverzahnung in einer Ebene mit der Mittelachse 16 des Ventilstößels 9 und der Mittelebene des Kipphebels 6 liegt. Durch den Aufbau, wie er in Figur 1 gezeigt ist, wird auch insbesondere das Verkippen des Kipphebels 6 gegenüber dem Ventilstößel 9 und dem Antriebsrad 3 minimiert, indem die Krafteinleitung beziehungsweise die Kraftübertragung in einer gemeinsamen Ebene liegt.

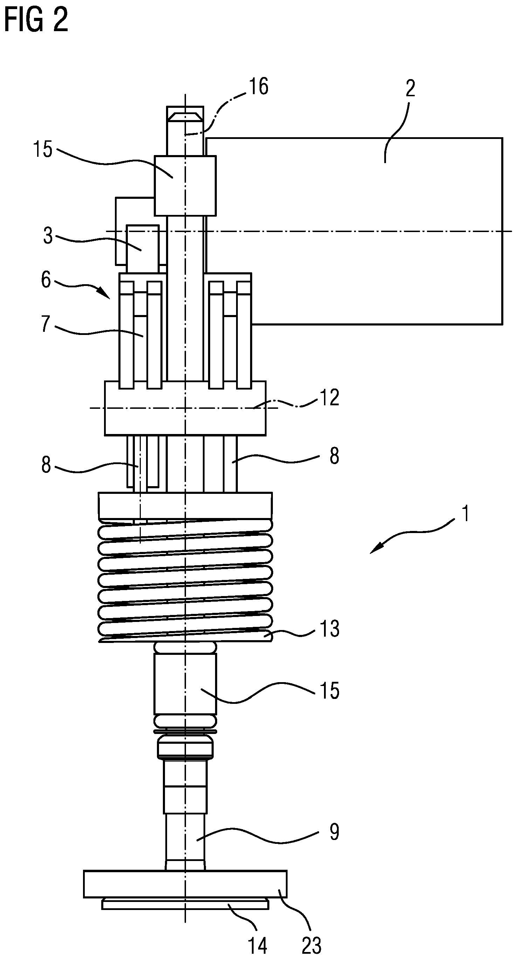

Die Figur 2 zeigt eine Aufsicht auf das Ventil 1 der Figur 1. Für identische Elemente sind dementsprechend dieselben Bezugszeichen verwendet worden.

In Figur 2 ist insbesondere zu erkennen, dass der Ventilstößel 9 exakt mittig durch den Kipphebel 6 geführt ist, so dass die Anbindungsbereiche 7 im gleichen Abstand rechts und links des Ventilstößels 9 angeordnet sind. Auch ist zu erkennen, dass die Schubstangen 8 exakt parallel zur Mittelachse 16 des Ventilstößels 9 ausgerichtet sind, wodurch die Entstehung von Querkräften weiter verhindert wird.

Die Innenverzahnung liegt in der Ansicht der Figur 2 direkt hinter dem Ventilstößel 9 und wird daher durch den Ventilstößel 9 überdeckt.

Weiterhin ist in Figur 2 dargestellt, dass der Ventilstößel 9 entlang der Mittelachse der Spiralfeder 13 ausgerichtet ist, um auch in der Kraftübertragung von der Spiralfeder 13 auf den Ventilstößel 9 keine zusätzlichen Querkräfte zu erzeugen. Die Figur 2 zeigt darüber hinaus deutlich dass sämtliche Drehachsen parallel zueinander angeordnet sind, wodurch ebenfalls eine gleichmäßigere Krafteinleitung in die einzelnen Elemente erzeugt wird.

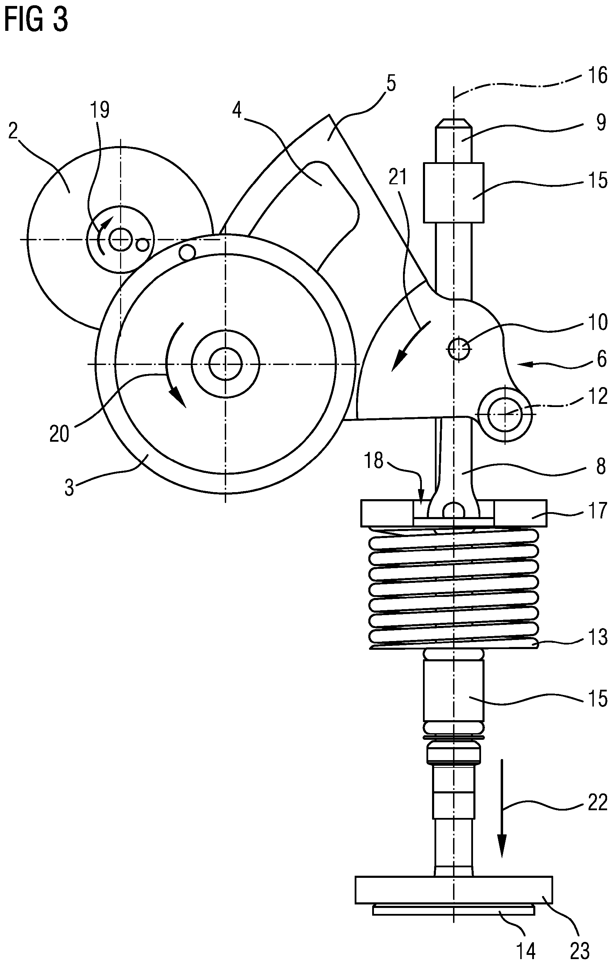

Die Figur 3 zeigt eine Seitenansicht des Ventils 1 der Figuren 1 und 2. Auch in Figur 3 sind dementsprechend für identische Elemente dieselben Bezugszeichen verwendet.

In Figur 3 ist zusätzlich gezeigt, dass die Aufnahmevorrichtung 17, gegenüber welcher sich die Spiralfeder 13 abstützt, Freistiche 18 aufweist, durch welche die Schubstangen 8 geführt sind. Die Freistiche 18 dienen insbesondere dazu eine ausreichende Freigängikeit für die Schubstangen 8 zu erzeugen, um die vollständige Funktion des Kniehebel-Gelenks zu ermöglichen und einen ausreichend großen Verstellweg des Ventiltellers 14 zu realisieren.

Zusätzlich ist in Figur 3 durch die Pfeile 19, 20, 21 und 22 die Bewegungsrichtung der einzelnen rotierenden Elemente 2, 3, 6 und des Ventilstößels 9 dargestellt.

Die Ausführungsbeispiele der Figuren 1 bis 3 weisen insbesondere keinen beschränkenden Charakter auf und dienen der Verdeutlichung des Erfindungsgedankens.

## Patentansprüche

1. Ventil (1) zum Freigeben oder Verschließen einer Strömungsstrecke, mit einem Ventilteller (14), einem Ventilstößel (9) und mit einer Übersetzungsvorrichtung (5, 6) zur Übersetzung einer Drehbewegung in eine translatorische Bewegung, wobei die Übersetzungsvorrichtung (6) durch einen um eine Drehachse (12) drehbar gelagerten Kipphebel (6) gebildet ist, welcher über ein Zahnsegment (5) von einer Antriebsscheibe (3) um die Drehachse (12) verdrehbar ist, wobei der Kipphebel (6) mittels Schubstangen (8) mit dem Ventilstößel (9) verbunden ist, wobei die Schubstangen (8) gegenüber dem Kipphebel (6) und dem Ventilstößel (9) drehbar gelagert sind, **dadurch gekennzeichnet,**
**dass** die Schubstangen radial versetzt und parallel zur Mittelachse (16) des Ventilstößels (9) angeordnet sind.

2. Ventil (1) nach Anspruch 1, **dadurch gekennzeichnet, dass** der Ventilstößel (9) mittels einer Vorspannvorrichtung (13) gegen die durch den Kipphebel (6) erzeugbare translatorische Bewegung vorgespannt ist.

3. Ventil (1) nach einem der vorhergehenden Ansprüche, **dadurch gekennzeichnet, dass** der Ventilstößel (9) zwei Radiallager (15) aufweist, wobei ein Radiallager (15) am zum Ventilteller (14) benachbarten Endbereich des Ventilstößels (9) angeordnet ist und das andere Radiallager (15) an dem vom Ventilteller (14) abgewandten Endbereich des Ventilstößels (9) angeordnet ist.

4. Ventil (1) nach einem der vorhergehenden Ansprüche, **dadurch gekennzeichnet, dass** das Zahnsegment (5) eine Innenverzahnung aufweist und die Antriebsscheibe (3) in die Innenverzahnung eingreift, wobei durch eine Verdrehung der drehbar gelagerten Antriebsscheibe (3) der Kipphebel (6) um seine Drehachse (12) verdrehbar ist.

5. Ventil (1) nach einem der vorhergehenden Ansprüche, **dadurch gekennzeichnet, dass** der Ventilstößel (9) einen sich in radialer Richtung vom Ventilstößel (9) aus erstreckende scheibenförmige Aufnahmevorrichtung (17) zur Aufnahme der Vorspannvorrichtung (13) aufweist, wobei die Aufnahmevorrichtung (17) Freistiche (18) zur Durchführung der Schubstangen (8) aufweist.

6. Ventil (1) nach einem der vorhergehenden Ansprüche, **dadurch gekennzeichnet, dass** die Schubstangen (8) beidseitig an ihren Endbereichen jeweils eine Durchgangsbohrung aufweisen, wobei die Durchgangsbohrungen parallel zur Drehachse (12) des Kipphebels (6) verlaufen und durch die Durchgangsbohrungen Achsenelemente geführt sind, die ebenfalls parallel zur Drehachse (12) des Kipphebels (6) ausgerichtet sind, wobei die Schubstangen (8) um die jeweiligen Achsenelemente drehbar sind und die Achsenelemente drehfest mit dem Ventilstößel (9) oder dem Kipphebel (6) verbunden sind.

7. Ventil (1) nach einem der vorhergehenden Ansprüche, **dadurch gekennzeichnet, dass** der Kipphebel (6) zwei Anbindungsbereiche (7) zur Anbindung jeweils einer Schubstange (8) aufweist, wobei der Kipphebel (6) eine Aussparung aufweist, durch welche der Ventilstößel (9) verläuft, wobei die Anbindungsbereiche (7) in radialer Richtung rechts und links von dem Ventilstößel (9) angeordnet sind.

8. Ventil (1) nach einem der vorhergehenden Ansprüche, **dadurch gekennzeichnet, dass** der Kipphebel (6) und/oder das Zahnsegment (5) und/oder die Antriebsscheibe (3) und/oder die Schubstangen (8) und/oder der Ventilstößel (9) aus einem Kunststoff gefertigt sind.

9. Ventil (1) nach einem der vorhergehenden Ansprüche, **dadurch gekennzeichnet, dass** das Ventil (1) durch die Vorspannvorrichtung (13) stromlos schließbar ist.

## Claims

1. Valve (1) for opening up or closing off a flow path, with a valve disk (14), with a valve tappet (9), and with a transmission device (5, 6) for transmitting a rotational movement into a translational movement, wherein the transmission device (6) is formed by a rocker lever (6) which is mounted so as to be rotatable about an axis of rotation (12) and which is able to be rotated about the axis of rotation (12) by a drive plate (3) via a toothed segment (5), wherein the rocker lever (6) is connected to the valve tappet (9) by means of pushrods (8), wherein the pushrods (8) are mounted rotatably in relation to the rocker lever (6) and the valve tappet (9), **characterized in that** the pushrods are arranged radially offset from and parallel to the central axis (16) of the valve tappet (9).

2. Valve (1) according to Claim 1, **characterized in that** the valve tappet (9) is preloaded, by means of a preload device (13), counter to the translational movement which is able to be generated by the rocker lever (6).

3. Valve (1) according to one of the preceding claims, **characterized in that** the valve tappet (9) has two radial bearings (15), wherein one radial bearing (15) is arranged at that end region of the valve tappet (9) which is adjacent to the valve disk (14) and the other radial bearing (15) is arranged at that end region of the valve tappet (9) which faces away from the valve disk (14).

4. Valve (1) according to one of the preceding claims, **characterized in that** the toothed segment (5) has an inner toothing and the drive plate (3) engages into the inner toothing, wherein, by rotating the rotatably mounted drive plate (3), the rocker lever (6) is able to be rotated about its axis of rotation (12).

5. Valve (1) according to one of the preceding claims, **characterized in that** the valve tappet (9) has a disk-shaped receiving device (17) for receiving the preload device (13), said receiving device extending from the valve tappet (9) in the radial direction, wherein the receiving device (17) has undercuts (18) for guiding through the pushrods (8).

6. Valve (1) according to one of the preceding claims, **characterized in that** the pushrods (8) have, on both sides at their end regions, in each case one through bore, wherein the through bores extend parallel to the axis of rotation (12) of the rocker lever (6), and axis elements which are likewise oriented parallel to the axis of rotation (12) of the rocker lever (6) are guided through the through bores, wherein the pushrods (8) are able to be rotated around the respective axis elements and the axis elements are connected rotationally conjointly to the valve tappet (9) or the rocker lever (6).

7. Valve (1) according to one of the preceding claims, **characterized in that** the rocker lever (6) has two attachment regions (7) for attaching in each case one pushrod (8), wherein the rocker lever (6) has a cutout through which the valve tappet (9) extends, wherein the attachment regions (7) are arranged on the right and left of the valve tappet (9) in the radial direction.

8. Valve (1) according to one of the preceding claims, **characterized in that** the rocker lever (6) and/or the toothed segment (5) and/or the drive plate (3) and/or the pushrods (8) and/or the valve tappet (9) are produced from a plastic.

9. Valve (1) according to one of the preceding claims, **characterized in that** the valve (1) is able to be closed by the preload device (13) when current is not being applied.

## Revendications

1. Soupape (1) servant à dégager ou fermer une voie d'écoulement, comprenant un disque de soupape (14), un poussoir de soupape (9) et un dispositif de conversion (5, 6) servant à la conversion d'un mouvement rotatif en un mouvement de translation, le dispositif de conversion (6) étant formé par un culbuteur (6) monté rotatif autour d'un axe de rotation (12), lequel culbuteur peut être entraîné en rotation autour de l'axe de rotation (12) par un disque d'entraînement (3) par le biais d'un segment denté (5), le culbuteur (6) étant relié au poussoir de soupape (9) au moyen de tiges de poussée (8), les tiges de poussée (8) étant montées rotatives par rapport au culbuteur (6) et au poussoir de soupape (9), **caractérisée en ce que** les tiges de poussée sont disposées de manière décalée radialement et parallèlement à l'axe médian (16) du poussoir de soupape (9).

2. Soupape (1) selon la revendication 1, **caractérisée en ce que** le poussoir de soupape (9) est précontraint au moyen d'un dispositif de précontrainte (13) à l'encontre du mouvement de translation pouvant être produit par le culbuteur (6).

3. Soupape (1) selon l'une des revendications précédentes, **caractérisée en ce que** le poussoir de soupape (9) comprend deux paliers radiaux (15), un palier radial (15) étant disposé au niveau de la région d'extrémité du poussoir de soupape (9) adjacente au disque de soupape (14) et l'autre palier radial (15) étant disposé au niveau de la région d'extrémité du poussoir de soupape (9) opposée au disque de soupape (14).

4. Soupape (1) selon l'une des revendications précédentes, **caractérisée en ce que** le segment denté (5) comprend une denture intérieure et le disque d'entraînement (3) s'engrène dans la denture intérieure, le culbuteur (6) pouvant être entraîné en rotation autour de son axe de rotation (12) par une rotation du disque d'entraînement (3) monté rotatif.

5. Soupape (1) selon l'une des revendications précédentes, **caractérisée en ce que** le poussoir de soupape (9) comprend un dispositif de réception (17) en forme de disque s'étendant dans la direction radiale à partir du poussoir de soupape (9) pour la réception du dispositif de précontrainte (13), le dispositif de réception (17) comprenant des dégagements (18) pour le passage des tiges de poussée (8).

6. Soupape (1) selon l'une des revendications précédentes, **caractérisée en ce que** les tiges de poussée (8) comprennent, des deux côtés au niveau de leur régions d'extrémité, respectivement un alésage traversant, les alésages traversants s'étendant parallèlement à l'axe de rotation (12) du culbuteur (6) et des éléments d'axe étant guidés à travers les alésages traversants, lesquels éléments d'axe sont orientés également parallèlement à l'axe de rotation (12) du culbuteur (6), les tiges de poussée (8) étant rotatives autour des éléments d'axe respectifs et les éléments d'axe étant reliés de manière solidaire en rotation au poussoir de soupape (9) ou au culbuteur (6).

7. Soupape (1) selon l'une des revendications précédentes, **caractérisée en ce que** le culbuteur (6) comprend deux régions de liaison (7) pour la liaison respectivement d'une tige de poussée (8), le culbuteur (6) comprenant un évidement à travers lequel le poussoir de soupape (9) s'étend, les régions de liaison (7) étant disposées, dans la direction radiale, à droite et à gauche du poussoir de soupape (9).

8. Soupape (1) selon l'une des revendications précédentes, **caractérisée en ce que** le culbuteur (6) et/ou le segment denté (5) et/ou le disque d'entraînement (3) et/ou les tiges de poussée (8) et/ou le poussoir de soupape (9) sont fabriqués à partir d'une matière synthétique.

9. Soupape (1) selon l'une des revendications précédentes, **caractérisée en ce que** la soupape (1) peut être fermée sans courant au moyen du dispositif de précontrainte (13).
